# EUROPÄISCHE PATENTSCHRIFT

(11) **EP 1 829 442 B1**
(45) Veröffentlichungstag und Bekanntmachung des Hinweises auf die Patenterteilung: **18.01.2012**
(21) Anmeldenummer: 07002484.9
(22) Anmeldetag: 06.02.2007
(51) Int. Cl.: A01C 17/00

(54) **Scheibenstreuer**
Disc fertiliser spreader
Épandeur à disques

(30) Priorität: 02.03.2006 DE 102006010230
(43) Veröffentlichungstag der Anmeldung: 05.09.2007
(73) Patentinhaber: RAUCH Landmaschinenfabrik GmbH, 76547 Sinzheim (DE)
(72) Erfinder: Rauch, Norbert, 77815 Bühl (DE)
(74) Vertreter: Lichti - Patentanwälte

(56) Entgegenhaltungen:
- EP-A1- 0 330 839
- EP-A1- 0 563 805
- EP-A2- 1 008 288
- DE-A1- 19 825 917
- DE-A1- 19 938 849

## Beschreibung

Die Erfindung betrifft einen Scheibenstreuer zum Verteilen von Streugut mit einem Behälter und wenigstens einer umlaufenden Verteilerscheibe, der das Streugut über eine Dosiereinrichtung, die mittels Aktuatoren und einer elektronischen Bedien-, Rechner- und Regeleinheit steuerbar ist, in Abhängigkeit von der gewünschten Streumenge und der Fahrgeschwindigkeit (Massenstrom) zuführbar ist, wobei die Parameter des Verteilsystems fernbedienbar mittels derselben Bedien- und Regeleinheit und Aktuatoren auf verschiedene Streugutsorten und/oder Arbeitsbreiten einstellbar sind.

Die Verteilung landwirtschaftlicher oder kommunaler Streugüter, wie Dünger, Auftau- oder Abstumpfungsmittel, mittels Wurfscheiben hat eine große praktische Bedeutung. Aufgrund der gestiegenen Anforderungen hinsichtlich einer präzisen Verteilung auch bei variierender Fahrgeschwindigkeit und variierender Streumenge stellt sich bei Scheibenstreuern ein besonderes Problem durch den sogenannten Mengeneffekt. Hierunter wird die unerwartete Reaktion des Verteilsystems auf sich verändernde Massenströme bei ein und derselben Streugutsorte verstanden.

Trotz aller Anstrengungen in der Praxis, den Mengeneffekt zu beseitigen, ist dieses Problem insbesondere aufgrund der unterschiedlichen Auswirkungen des Mengeneffektes bei unterschiedlichen Streugütern noch nicht gelöst. Eine aus der Praxis bekannte mechanische Lösung (DE 10 2005 015 236, nicht veröffentlicht) mit einer aus einer Dosieröffnung und einem Dosierschieber in einem drehbaren Behälterboden bestehenden Dosiereinrichtung sieht eine bestimmte Öffnungsgeometrie der Dosieröffnung vor, die zusammen mit einer Variation des Aufgabepunktes bei der Mehrzahl von Streugütern zu befriedigenden Ergebnissen führt. Dennoch lässt sich die nachteilige Wirkung des Mengeneffektes bei bestimmten Streugutsorten nicht vermeiden.

Bei den heute in der Praxis üblichen, nicht fernbedienbaren Verteilsystemen, die z.B. mit einer Veränderung der Länge und/oder der Winkelanstellung der Wurfflügel auf der Verteilerscheibe, mit der Veränderung der Neigung der Verteilscheiben bzw. des gesamten Streuers oder der Veränderung der Lage des Aufgabepunktes - hierzu zählt auch das o.g. Verteilsystem - werden Streutabellen verwendet, mit deren Hilfe das Verteilsystem auf einen bestimmten Massenstrom manuell eingestellt werden kann. Bei diesem soll dann eine präzise Verteilung erreicht werden. Eine Massenstromänderung, z.B. bei Änderung der Dosiermenge oder der Fahrgeschwindigkeit, ist dann während der Fahrt nicht möglich.

Der druckschriftliche Stand der Technik für fernbediente Verteilsysteme, z.B. zur fernbedienten Verstellung des Aufgabepunktes (DE 41 34 315 A1, EP 0 563 805 A1) geben entweder keine Hinweise oder aber eine fehlerhafte und unzureichende Anweisung für die Lösung des Problems des Mengeneffektes.

Ausgehend von dem eingangs genannten und die Merkmale des Oberbegriffs des Anspruchs 1 bildenden Stand der Technik aus den vorgenannten Druckschriften liegt der Erfindung die Aufgabe zugrunde, unabhängig von der Art des Verteilsystems und unter Berücksichtigung der zu verteilenden Streugutsorte eine Lösung für die Eliminierung des Mengeneffektes vorzuschlagen.

Diese Aufgabe wird erfindungsgemäß dadurch gelöst, dass in der Bedien-, Rechner- und Regeleinheit für eine Streugutsorte oder eine Gruppe von Streugutsorten mindestens eine Kennlinie für die Abhängigkeit der Einstellparameter des Verteilsystems vom Massenstrom gespeichert ist.

Durch das Abspeichern einer Kennlinie für wenigstens eine Streugutsorte oder eine Gruppe von Streugutsorten mit ähnlichem Streuverhalten in dem Bedien-, Rechner- und Regelgerät können die Parameter für jedes bekannte Verteilsystem (Aufgabepunkt, Streuerneigung, Stellung der Wurfflügel) auf jede Streugutsorte, jede Streumengenänderung und jede Änderung der Fahrgeschwindigkeit während der Fahrt automatisch eingestellt werden, indem die Aktuatoren von der Regeleinheit entsprechend angesteuert werden. Die Massenstromkennlinie berücksichtigt dabei den der entsprechenden Streugutsorte eigenen Mengeneffekt. Durch diese Maßnahmen ist eine in funktioneller Hinsicht einfache Lösung der mit dem Mengeneffekt (Verfälschung des Streubildes in Abhängigkeit vom Massenstrom) erreicht.

In bevorzugter Ausführung ist vorgesehen, dass für unterschiedliche Arbeitsbreiten und/oder unterschiedliche Bauarten der Verteilerscheibe wenigstens zwei Kennlinien für jeweils eine Streugutsorte oder eine Gruppe von Streugutsorten gespeichert sind.

Durch diese Maßnahme wird bei einer anderen Arbeitsbreite und/oder einer anderen Verteilerscheibe die unterschiedliche Auswirkung auf den Mengeneffekt ausgeglichen.

Eine weitere Ausgestaltung der Erfindung zeichnet sich dadurch aus, dass mehrere Typen von Kennlinien in der Bedien- und Regeleinheit gespeichert sind, die verschiedenen Streugutsorten oder Gruppen von Streugutsorten zugeordnet und mittels einer Typenbezeichnung aufrufbar sind. Auch dadurch ist eine unproblematische fernbediente automatische Selbsteinstellung der Parameter des Verteilsystems möglich.

Zweckmäßigerweise ist jede in der Bedien- und Regeleinheit gespeicherte Kennlinie einer Streugutsorte einer Gruppe von Streugutsorten mit ähnlichem Rieselverhalten und ähnlichem Fließverhalten auf der Verteilscheibe zugeordnet. Stattdessen kann auch vorgesehen sein, dass jede in der Bedien- und Regeleinheit gespeicherte Streugutsorte eine eigene gespeicherte Kennlinie aufweist.

Der Verlauf der Kennlinie hängt von der Art der Streugutsorte ab. Die Kennlinie kann deshalb linear oder unstetig sein.

In einer vorteilhaften Ausführung ist vorgesehen, dass für jede Streugutsorte, Arbeitsbreite und ggf. Bauart der Verteilerscheibe eine Kennlinie für die Einstellung der Parameter des Verteilsystems in Abhängigkeit des Massenstroms gespeichert ist. Weist das Verteilsystem für die Änderungen der Arbeitsbreite eine Einrichtung zur Verlagerung des Aufgabepunktes auf, so wird als Einstellparameter die Drehwinkellage der Aufgabe des Streugutes auf die Verteilerscheibe herangezogen. Ist stattdessen eine Einrichtung zur Verstellung der Neigungslage der Verteilerscheiben gegenüber der Horizontalebene, z.B. durch Neigung des gesamten Streuaggregates vorgesehen, so wird als Einstellparameter der Neigungswinkel herangezogen. Wird schließlich stattdessen die Änderung der Arbeitsbreite durch Änderung der Winkelanstellung und der Position der Wurfflügel auf der Verteilerscheibe genutzt, wird als Einstellparameter die Position der Wurfflügel herangezogen.

In einer vorteilhaften Ausgestaltung ermöglichen die Kennlinien eine stufenlose Einstellung der Parameter des Verteilsystems.

Bei der heute häufig üblichen Datenübertragung aus dem Internet der von dem Streuguthersteller gelieferten Streutabelle für eine bestimmte Düngersorte, Arbeitsbreite und ggf. die Bauart der Verteilerscheibe wird vorzugsweise auch die Kennlinie über Internet übertragen, so dass der Landwirt nur noch die entsprechenden Daten in das Bedien- und Regelgerät einspeichern muss.

Zur Bestimmung des Massenstroms wird vorteilhafter Weise der Sollmassenstrom, berechnet aus Fahrgeschwindigkeit, eingegebener Arbeitsbreite und gewünschter Streumenge herangezogen.

Von diesem Sollmassenstrom kann der Istmassenstrom der von der Dosiereinrichtung auf die Verteilerscheibe geführten Streugutpartikel abweichen, so dass in einer bevorzugten Ausführung zur Bestimmung des Massenstroms der Istmassenstrom, gemessen beispielsweise mittels eines mitfahrenden Massenstrommessystems oder Wiegesystems herangezogen werden. Massenstrommesssysteme und Wiegesysteme, die hierfür geeignet sind, sind im Stand der Technik bekannt und bedürfen deshalb an dieser Stelle keiner weiteren Beschreibung.

Vorzugsweise werden vor Streubeginn die gewünschte Durchschnitts- oder Anfangsstreumenge, die beabsichtigte Durchschnitts- oder Anfangsfahrgeschwindigkeit, die Arbeitsbreite, ggf. die Bauart der Verteilerscheibe sowie die Schüttgutsorte am Bedienpult eingegeben und die zugehörige Kennlinie aufgerufen. Bei Streubeginn stellt die Regeleinheit aufgrund dieser Daten den zugehörigen Parameter für das Verteilsystem automatisch ein. Diese für den Beginn des Streubetriebs eingestellten Parameter werden dann beispielsweise bei Änderung der Fahrgeschwindigkeit oder beim Grenzstreuen (Änderung der effektiven Arbeitsbreite) entsprechend der gespeicherten Kennlinie geändert. Gleiches gilt für eine bedarfsabhängige Änderung der Streumenge entsprechend einem kartierten Düngerbedarf des abzustreuenden Feldes.

Die Erfindung findet vorzugsweise Anwendung bei einem Verteilsystem mit einer Einrichtung zur Verstellung des Aufgabepunktes des Streugutes auf der Verteilerscheibe. In diesem Fall wird also die Drehwinkellage des Aufgabepunktes auf der Verteilerscheibe als Einstellparameter herangezogen. Bei Scheibenstreuern ist es bekannt, den Behälter mit einer drehbaren Bodenplatte mit integrierter Dosieröffnung auszustatten, so dass als Einstellparameter die Drehwinkellage des Bodens und damit der Dosieröffnung gegenüber der Verteilerscheibe herangezogen werden kann.

In der Verteiltechnik ist es ferner bekannt, Sensoren zur Erfassung des Streuwinkels des die Verteilerscheibe verlassenden Streugutes und eine Auswerteelektronik vorzusehen, um für den Fall der Abweichung des gemessenen Streuwinkels vom Sollstreuwinkel in die Einstellung des Streugerätes korrigierend einzugreifen. Durch diese Auswerteelektronik wird die Einrichtung zur Verstellung des Aufgabepunktes in Abhängigkeit des gespeicherten Soll-Streuwinkels bezogen auf die Arbeitsbreite und gegebenenfalls die Bauart der Verteilerscheibe eingestellt. Dieses Sensorsystem kann den Ist-Streuwinkel nur intermittierend, z.B. alle 60s erfassen. Während dessen kann sich jedoch der Streuwinkel aufgrund einer Massenstromänderung (Mengeneffekt) verändert haben. Deshalb reagiert dann die Einrichtung für die Verstellung des Aufgabepunktes automatisch aufgrund der für diese Streugutsorte oder Gruppe von Streugutsorten gespeicherten Kennlinie.

In einer bevorzugten Ausführung der Erfindung ist zumindest eine Kennlinie vorgesehen, die für kleine Massenströme den Aufgabepunkt in Drehrichtung der Verteilerscheibe in eine späte Lage und für große Massenströme in eine frühere Lage einstellt. Durch diese Maßnahme wird den negativen Folgen des Mengeneffektes in besonders wirksamer Weise begegnet. Stattdessen kann vorgesehen sein, dass zumindest eine weitere Kennlinie vorgesehen ist, die für kleinere Massenströme den Aufgabepunkt gegen die Drehrichtung der Verteilerscheibe in eine frühere und für größere Massenströme in eine spätere Lage einstellt.

Es kommt nicht selten vor, dass der Landwirt eine ihm unbekannte Streugutsorte kauft, für die ihm keine Streutabellen vorliegen und für die ihm folglich auch keine Massenstrom-Kennlinie zur Verfügung steht. In einem solchen Fall werden für diese Streugutsorte bei wenigstens zwei unterschiedlichen Massenströmen die Parameter für die Einstellung des Aufgabepunktes für eine präzise Verteilung ermittelt, beispielsweise mit Hilfe eines sogenannten Praxis-Prüfsets mit quer zur Fahrtrichtung aufgestellten Auffangschalen, und werden die jeweiligen Parameter gespeichert, wobei ein Rechner der Bedien- und Regeleinheit aus den gespeicherten Parametern die Kennlinie errechnet und speichert, so dass auch beim Verteilen einer solchen Streugutsorte eine Berücksichtigung des Mengeneffektes in Abhängigkeit vom Massenstrom möglich ist.

Bei einem wie heute üblichen Zweischeibenstreuer sind zwei Aktuatoren für die Einstellung der Dosiermenge und zwei Aktuatoren für die Verstellung des Aufgabepunktes vorgesehen, deren Einstellparameter von derselben Kennlinie steuerbar sind. Vorzugsweise besitzen die Aktuatoren eine Lagerückmeldung.

Bei einem Verteilsystem, bei dem die Einstellung auf verschiedene Streugutsorten, Arbeitsbreiten und Massenströme durch Verstellung der Neigung der Verteilerscheiben bzw. des gesamten Streuers erfolgt, ist der aus der Kennlinie gewonnene Parameter der Neigungswinkel der Verteilerscheiben gegenüber der Horizontalebene. Auch diese Einstellung kann durch Aktuatoren hydraulischer oder elektrischer Art erfolgen.

## Patentansprüche

1. Scheibenstreuer zum Verteilen von Streugut mit einem Behälter und wenigstens einer umlaufenden Verteilerscheibe, der das Streugut über eine Dosiereinrichtung, die mittels Aktuatoren und einer elektronischen Bedien-Rechner- und Regeleinheit steuerbar ist, in Abhängigkeit von der gewünschten Streumenge und der Fahrgeschwindigkeit (Massenstrom) zuführbar ist, wobei die Parameter des Verteilsystems fernbedienbar mittels derselben Bedien-, Rechner und Regeleinheit und Aktuatoren auf verschiedene Streugutsorten und/oder Arbeitsbreiten einstellbar sind, **dadurch gekennzeichnet, dass** in der Bedien-, Rechner- und Regeleinheit für eine Streugutsorte oder eine Gruppe von Streugutsorten mindestens eine Kennlinie für die Abhängigkeit der Einstellparameter des Verteilsystems vom Massenstrom gespeichert ist.

2. Scheibenstreuer nach Anspruch 1, **dadurch gekennzeichnet, dass** in der Bedien-, Rechner- und Regeleinheit wenigstens zwei unterschiedliche Kennlinien für jeweils
eine Streugutsorte oder Gruppe von Streugutsorten für unterschiedliche Arbeitsbreiten und/oder unterschiedliche Bauarten der Verteilerscheibe gespeichert sind.

3. Scheibenstreuer nach Anspruch 1 oder 2, **dadurch gekennzeichnet, dass** mehrere Typen von Kennlinien gespeichert sind, die verschiedenen Streugutsorten oder Gruppen von Streugutsorten zugeordnet und mittels einer Typenbezeichnung aufrufbar sind.

4. Scheibenstreuer nach einem der Ansprüche 1 bis 3, **dadurch gekennzeichnet, dass** jede in der Bedien-, Rechner- und Regeleinheit gespeicherte Kennlinie einer Streugutsorte oder einer Gruppe von Streugutsorten zugeordnet ist.

5. Scheibenstreuer nach einem der Ansprüche 1 bis 3, **dadurch gekennzeichnet, dass** jede in der Bedien-, Rechner- und Regeleinheit gespeicherte Streugutsorte eine eigene gespeicherte Kennlinie aufweist.

6. Scheibenstreuer nach einem der Ansprüche 1 bis 5, **dadurch gekennzeichnet, dass** die Kennlinie linear ist.

7. Scheibenstreuer nach einem der Ansprüche 1 bis 5, **dadurch gekennzeichnet, dass** die Kennlinie unstetig ist.

8. Scheibenstreuer nach einem der Ansprüche 1 bis 7, **dadurch gekennzeichnet, dass** für jede Streugutsorte, Arbeitsbreite und gegebenenfalls Bauart der Verteilerscheibe eine Kennlinie für die Einstellung der Parameter des Verteilsystems in Abhängigkeit des Massenstroms vorgesehen ist.

9. Scheibenstreuer nach einem der Ansprüche 1 bis 9, **dadurch gekennzeichnet, dass** die Kennlinie eine stufenlose Einstellung der Parameter des Verteilsystems in Abhängigkeit des Massenstroms ermöglichen.

10. Scheibenstreuer nach einem der Ansprüche 1 bis 9, **dadurch gekennzeichnet, dass** bei einer Datenübertragung aus dem Internet der von dem Streuguthersteller gelieferten Streutabelle für eine bestimmte Düngersorte, Arbeitsbreite und gegebenenfalls Bauart der Verteilerscheibe auch die Kennlinie übertragen wird.

11. Scheibenstreuer nach einem der Ansprüche 1 bis 10, **dadurch gekennzeichnet, dass** zur Bestimmung des Massenstroms der Sollmassenstrom, berechnet aus Fahrgeschwindigkeit, eingegebener Arbeitsbreite und gewünschter Streumenge, herangezogen wird.

12. Scheibenstreuer nach einem der Ansprüche 1 bis 10, **dadurch gekennzeichnet, dass** zur Bestimmung des Massenstroms der Istmassenstrom, gemessen beispielsweise mittels eines mitfahrenden Massenstrommesssystems oder Wiegesystems herangezogen wird.

13. Scheibenstreuer nach einem der Ansprüche 1 bis 12, **dadurch gekennzeichnet, dass** vor Streubeginn die Anfangsoder Durchschnittsstreumenge, die Anfangs- oder Durchschnittsfahrgeschwindigkeit, die Arbeitsbreite und gegebenenfalls die Bauart der Verteilerscheibe sowie die Streugutsorte am Bedienpult eingegeben werden, die zugehörige Kennlinie ausgewählt oder automatisch aufgerufen wird und bei Streubeginn aufgrund dieser Daten die Regeleinheit den zugehörigen Parameter für das Verteilsystem automatisch einstellt.

14. Scheibenstreuer nach einem der Ansprüche 1 bis 13, **dadurch gekennzeichnet, dass** das Verteilsystem eine Einrichtung zur Verstellung des Aufgabepunktes des Streugutes auf der Verteilerscheibe aufweist.

15. Scheibenstreuer nach einem der Ansprüche 1 bis 14 mit einem Behälter mit drehbarer Bodenplatte und integrierter Dosieröffnung, **dadurch gekennzeichnet, dass** als Einstellparameter die Drehwinkellage des Bodens gegenüber der Verteilerscheibe dient.

16. Scheibenstreuer nach Anspruch 14 oder 15, **dadurch gekennzeichnet, dass** Sensoren zur Erfassung des Streuwinkels des die Verteilerscheibe verlassenden,Streugutes und eine Auswerteelektronik vorgesehen sind, die die Einrichtung zur Verstellung des Aufgabepunktes in Abhängigkeit des für jede Streugutsorte oder Gruppe von Streugutsorten gespeicherten Soll-Streuwinkels bezogen auf die Arbeitsbreite und gegebenenfalls die Bauart der Verteilerscheibe einstellen, und dass bei Änderung des Massenstroms die Einrichtung für die Verstellung.des Aufgabepunktes aufgrund der für diese Streugutsorte oder Gruppe von Streugutsorten gespeicherten Kennlinie reagiert.

17. Scheibenstreuer nach einem der Ansprüche 14 bis 16, **dadurch gekennzeichnet, dass** zumindest eine Kennlinie vorgesehen ist, die für kleine Massenströme den Aufgabepunkt in Drehrichtung der Verteilerscheibe in eine späte Lage und für große Massenströme in eine frühere Lage einstellt.

18. Scheibenstreuer nach einem der Ansprüche 1 bis 17, **dadurch gekennzeichnet, dass** zumindest eine weitere Kennlinie vorgesehen ist, die für kleinere Massenströme den Aufgabepunkt gegen die Drehrichtung der Verteilerscheibe in eine frühere und für große Massenströme in eine spätere Lage einstellt.

19. Scheibenstreuer nach einem der Ansprüche 1 bis 18, **dadurch gekennzeichnet, dass** zur Erstellung der Kennlinie einer unbekannten Streugutsorte bei wenigstens zwei unterschiedlichen Massenströmen die Parameter für die Einstellung des Aufgabepunktes für eine präzise Verteilung ermittelt und die jeweiligen Parameter gespeichert werden, und dass ein Rechner der Regeleinheit daraus die Kennlinie errechnet und speichert.

20. Scheibenstreuer nach einem der Ansprüche 14 bis 19, **dadurch gekennzeichnet, dass** bei einem Zweischeibenstreuer zwei Aktuatoren für die Einstellung der Dosiermenge und zwei Aktuatoren für die Verstellung des Aufgabepunktes vorgesehen sind.

21. Scheibenstreuer nach einem der Ansprüche 1 bis 20, **dadurch.gekennzeichnet, dass** die Aktuatoren eine Lagerückmeldung aufweisen.

22. Scheibenstreuer nach einem der Ansprüche 1 bis 13, **dadurch gekennzeichnet, dass** bei einem Verteilsystem, bei dem die Einstellung auf verschiedene Streugutsorten, Arbeitsbreiten und Massenströme durch Verstellung der Neigung der Verteilerscheiben bzw. des gesamten Streuers erfolgt, der aus der Kennlinie gewonnen Parameter der Neigungswinkel der Verteilerscheiben gegenüber der Horizontalebene ist.

## Claims

1. A disc spreader for distributing spreading material, with a container and at least one rotary spreader disc, to which the spreading material can be fed via a dosing device which is controllable by means of actuators and an electronic operating computer and control unit, as a function of the spreading volume required and the driving speed (mass flow), wherein the parameters of the distribution system can be adjusted, by remote control by means of the same operating, computer and control unit and to different types of spreading materials and/or working widths, **characterised in that** at least one characteristic for the dependence of the setting parameters of the distribution system on the mass flow is stored for a type of spreading material or a group of types of spreading materials.

2. The disc spreader according to Claim 1, **characterised in that** at least two different characteristics are stored in the operating, computer and control unit for a type of spreading material or a group of spreading material types for different working widths and/or different designs of the spreader disc.

3. The disc spreader according to Claim 1 or 2, **characterised in that** a plurality of types of characteristics are stored, the different spreading material types or groups of spreading material types are assigned and can be called by means of a type designation.

4. The disc spreader according to any one of Claims 1 to 3, **characterised in that** each characteristic stored in the operating, computer and control unit is assigned to a spreading material type or a group of spreading material types.

5. The disc spreader according to any one of Claims 1 to 3, **characterised in that** each spreading material type stored in the operating, computer and control unit has its own stored characteristic.

6. The disc spreader according to any one of Claims 1 to 5, **characterised in that** the characteristic is linear.

7. The disc spreader according to any one of Claims 1 to 5, **characterised in that** the characteristic is inconsistent.

8. The disc spreader according to any one of Claims 1 to 7, **characterised in that** one characteristic is provided for each spreading material type, working width and, if applicable, design of the spreader disc for setting the parameters of the distribution system as a function of the mass flow.

9. The disc spreader according to any one of Claims 1 to 9, **characterised in that** the characteristic allows stepless setting of the parameters of the distribution system as a function of the mass flow.

10. The disc spreader according to anyone of Claims 1 to 9, **characterised in that** in the case of data transfer, the characteristic is also transferred from the Internet of the setting chart supplied by the spreading material manufacturer for a certain type of fertiliser, working width and, if applicable, design of the spreader disc.

11. The disc spreader according to any one of Claims 1 to 10, **characterised in that** the theoretical mass flow, calculated from the speed of travel, the working width entered and the desired spreading volume, is used to determine the mass flow.

12. The disc spreader according to any one of Claims 1 to 10, **characterised in that** the actual mass flow, measured for example by means of a mass flow measuring system or weighing system moving with the spreader, is used to determine the mass flow.

13. The disc spreader according to any one of Claims 1 to 12, **characterised in that** before spreading commences the initial or average spreading volume, the initial or average speed of travel, the working width and, if applicable, the design of the spreader disc, as well as the type of spreading material, are entered at the control desk, **in that** the associated characteristic is selected or automatically called and, at the commencement of spreading, the control unit sets the associated parameter automatically for the distribution system on the basis of these data.

14. The disc spreader according to any one of Claims 1 to 13, **characterised in that** the distribution system has a device for adjusting the point of application of the spreading material on the spreader disc.

15. The disc spreader according to any one of Claims 1 to 14, with a container with a rotary bottom plate and integrated dosing opening, **characterised in that** the rotational angle position of the bottom relative to the spreader disc serves as the setting parameter.

16. The disc spreader according to Claim 14 or 15, **characterised in that** sensors are provided for recording the spreading angle of the spreading material leading the spreader disc, together with evaluation electronics which adjust the device for setting the point of application as a function of the theoretical spreading angle stored for each spreading material type or group of spreading material types related to the working width and, if applicable, the design of the spreader disc, and **in that**, when the mass flow changes, the device for setting the point of application reacts according to the characteristic stored for this spreading material type or group of spreading material types.

17. The disc spreader according to any one of Claims 14 to 16, **characterised in that** at least one characteristic is provided which sets the point of application for small mass flows in the direction of rotation of the spreader disc to a late position and that for large mass flows to an earlier position.

18. The disc spreader according to any one of Claims 1 to 17, **characterised in that** at least one further characteristic is provided which sets the point of application for smaller mass flows against the direction of rotation of the spreader disc to an earlier position, and that for large mass flows to a later position.

19. The disc spreader according to any one of Claims 1 to 18, **characterised in that** the parameters for setting the point of application for a precise distribution are determined for establishing the characteristic of an unknown spreading material type for at least two different mass flows, and **in that** the parameters concerned are stored and **in that** a computer of the control unit calculates the characteristic from this and stores it.

20. The disc spreader according to any one of Claims 14 to 19, **characterised in that** in a two-disc spreader two actuators are provided for setting the dosing volume and two actuators are provided for adjusting the point of application.

21. The disc spreader according to any one of Claims 1 to 20, **characterised in that** the actuators have a position feedback.

22. The disc spreader according to any one of Claims 1 to 13, **characterised in that** in the case of a distribution system in which the setting to different spreading material types, working widths and mass flows is carried out by adjusting the inclination of the spreader discs or the entire spreader, and **in that** the parameter obtained from the characteristic is the angle of inclination of the spreader discs to the horizontal plane.

## Revendications

1. Épandeur à disques permettant de disperser un produit d'épandage à l'aide d'un réservoir et d'au moins un disque disperseur l'entourant auquel peut être amené le produit d'épandage par le biais d'un dispositif de dosage pouvant être alimenté à l'aide d'actionneurs et d'une unité de réglage, calcul et commande électronique, en fonction de la quantité de dispersion souhaitée et de la vitesse d'avancée (débit massique), les paramètres du système de dispersion étant réglables de façon télécommandable à l'aide de la même unité de réglage, calcul et commande et des actionneurs en fonction des différentes sortes de produit d'épandage et/ou des largeurs de travail, **caractérisé en ce qu'**au moins une courbe caractéristique dépendant des paramètres de réglage du système de dispersion de débit massique est mémorisée dans l'unité de réglage, calcul et commande pour une sorte de produit d'épandage ou un groupe de sortes de produit d'épandage.

2. Épandeur à disques selon la revendication 1, **caractérisé en ce qu'**au moins deux courbes caractéristiques différentes sont mémorisées dans l'unité de réglage, calcul et commande pour différentes largeurs de travail et/ou différents travaux à réaliser par le disque disperseur, pour une sorte de produit d'épandage ou un groupe de sortes de produit d'épandage, respectivement.

3. Épandeur à disques selon la revendication 1 ou 2, **caractérisé en ce que** plusieurs types de courbes caractéristiques sont mémorisés, ceux-ci pouvant être associés à différentes sortes de produit d'épandage ou groupes de sortes de produit d'épandage et être désignés par le biais d'une désignation par type.

4. Épandeur à disques selon l'une quelconque des revendications 1 à 3, **caractérisé en ce que** chaque courbe caractéristique mémorisée dans l'unité de réglage, calcul et commande est associée à une sorte de produit d'épandage ou à un groupe de sortes de produit d'épandage.

5. Épandeur à disques selon l'une quelconque des revendications 1 à 3, **caractérisé en ce que** chaque sorte de produit d'épandage mémorisée dans l'unité de réglage, calcul et commande présente une courbe caractéristique mémorisée propre.

6. Épandeur à disques selon l'une quelconque des revendications 1 à 5, **caractérisé en ce que** la courbe caractéristique est linéaire.

7. Épandeur à disques selon l'une quelconque des revendications 1 à 5, **caractérisé en ce que** la courbe caractéristique est discontinue.

8. Épandeur à disques selon l'une quelconque des revendications 1 à 7, **caractérisé en ce qu'**une courbe caractéristique est prévue pour le réglage des paramètres du système de dispersion en fonction du débit massique, pour chaque sorte de produit d'épandage, largeur de travail et le cas échéant type de travaux à réaliser par le disque disperseur.

9. Épandeur à disques selon l'une quelconque des revendications 1 à 9, **caractérisé en ce que** la courbe caractéristique permet de régler en continu les paramètres du système de dispersion en fonction du débit massique.

10. Épandeur à disques selon l'une quelconque des revendications 1 à 9, **caractérisé en ce** lorsque le fabricant du produit d'épandage fournit des données par Internet, notamment la table de dispersion définie pour une sorte d'engrais, une largeur de travail et le cas échéant le type de travaux à réaliser du disque disperseur, il transmet également la courbe caractéristique correspondante.

11. Épandeur à disques selon l'une quelconque des revendications 1 à 10, **caractérisé en ce que** pour déterminer le débit massique, on se sert du débit massique théorique tenant compte par calcul de la vitesse d'avancée, de la largeur de travail prévue et de la quantité de dispersion souhaitée.

12. Épandeur à disques selon l'une quelconque des revendications 1 à 10, **caractérisé en ce que** pour déterminer le débit massique, on se sert du débit massique réel utilisant par mesure par exemple un système de mesure de débit massique ou un système de pesée embarqués.

13. Épandeur à disques selon l'une quelconque des revendications 1 à 12, **caractérisé en ce qu'**avant le début de la dispersion, la quantité de dispersion de départ ou moyenne, la vitesse d'avancée de départ ou moyenne, la largeur de travail et le cas échéant le type de travaux à réaliser par le disque disperseur ainsi que la sorte de produit d'épandage sont entrés au niveau du pupitre de commande, que la courbe caractéristique associée est sélectionnée et que l'unité de réglage règle automatiquement les paramètres associés pour le système de dispersion au début de la dispersion sur la base de ces données.

14. Épandeur à disques selon l'une quelconque des revendications 1 à 13, **caractérisé en ce que** le système de dispersion comporte un dispositif de réglage du point de délivrance du produit d'épandage sur le disque disperseur.

15. Épandeur à disques selon l'une quelconque des revendications 1 à 14, avec un réservoir à plaque de fond pivotable et une ouverture de dosage intégrée, **caractérisé en ce que** le paramètre de réglage utilisé est la position angulaire de rotation du fond par rapport au disque.

16. Épandeur à disques selon la revendication 14 ou 15, **caractérisé en ce que** des capteurs et un système électronique d'analyse sont prévus pour enregistrer l'angle de dispersion du produit d'épandage quittant le disque disperseur, ces éléments permettant de régler le dispositif de réglage du point de délivrance en fonction de l'angle de dispersion théorique mémorisé pour chaque sorte de produit d'épandage ou groupe de sortes de produit d'épandage, en tenant compte de la largeur de travail et le cas échéant du type de travaux à réaliser par le disque disperseur et qu'en cas de variation du débit massique, le dispositif de réglage du point de délivrance réagit sur la base de la courbe caractéristique mémorisée pour cette sorte de produit d'épandage ou ce groupe de sortes de produit d'épandage.

17. Épandeur à disques selon l'une quelconque des revendications 14 à 16, **caractérisé en ce qu'**au moins une courbe caractéristique est prévue qui règle le point de délivrance pour les faibles débits massiques dans une position reculée dans le sens de rotation du disque disperseur et dans une position avancée pour les débits massiques élevés.

18. Épandeur à disques selon l'une quelconque des revendications 1 à 17, **caractérisé en ce qu'**au moins une courbe caractéristique supplémentaire est prévue qui règle le point de délivrance dans une position plus avancée pour les débits massiques plus faibles, dans le sens contraire à la rotation du disque disperseur, et dans une position plus reculée pour les débits massiques élevés.

19. Épandeur à disques selon l'une quelconque des revendications 1 à 18, **caractérisé en ce que** la réalisation de la courbe caractéristique d'une sorte de produit d'épandage inconnue avec au moins deux débits massiques différents est calculée à l'aide des paramètres de réglage du point de délivrance, pour une dispersion précise, et que les paramètres respectifs sont mémorisés et qu'un système de calcul de l'unité de réglage en déduit la courbe caractéristique et la mémorise.

20. Épandeur à disques selon l'une quelconque des revendications 14 à 19, **caractérisé en ce qu'**en présence d'un épandeur à deux disques, deux actionneurs sont prévus pour le réglage de la quantité de dosage et deux actionneurs sont prévus pour le réglage du point de délivrance.

21. Épandeur à disques selon l'une quelconque des revendications 1 à 20, **caractérisé en ce que** les actionneurs comportent un système de retour de position.

22. Épandeur à disques selon l'une quelconque des revendications 1 à 13, **caractérisé en ce qu'**en présence d'un système de dispersion dans lequel le réglage est réalisé par réglage de l'inclinaison des disques d'épandage et/ou de l'ensemble du système d'épandage en fonction de différentes sortes de produit d'épandage, différentes largeurs de travail et différents débits massiques, le paramètre correspondant à la courbe caractéristique est l'angle d'inclinaison des disques d'épandage par rapport au plan horizontal.
